# EUROPÄISCHE PATENTANMELDUNG

(11) **EP 1 647 479 A1**
(43) Veröffentlichungstag der Anmeldung: **19.04.2006**
(21) Anmeldenummer: 04024230.7
(22) Anmeldetag: 12.10.2004
(51) Int. Cl.: B62M 23/02, B62M 7/12, B62K 11/10

(54) **Elektrisch betriebene Antriebsvorrichtung**

(71) Anmelder: Jeuken, Dieter, 47809 Krefeld (DE)
(72) Erfinder: Jeuken, Dieter, 47809 Krefeld (DE)

(57) **Zusammenfassung**

Mit der Elektrisch betriebenen Antriebsvorrichtung kann jedes Serienfahrrad ausgestattet werden.

Für die Montage oder Demontage der Antriebsvorrichtung benötigt man kein Werkzeug und einen Zeitaufwand von wenigen Minuten.

Durch den Freilauf im Antriebszahnrad (3) kann bei abgestellten Elektromotor mit Pedalkraft das Fahrrad ohne zusätzlichen Kraftaufwand bewegt werden.

Nach der Demontage der Antriebsvorrichtung hat man wieder ein Fahrrad mit unerheblich Veränderungen.

## Beschreibung

Die Erfindung ist geeignet Serienfahrräder mit einem Elektroantrieb auszustatten, ohne das am Fahrrad Änderungen vorgenommen werden müssen.

Das Fahrrad kann ohne Einschränkung mit Pedalkraft genutzt werden ohne oder mit Elektroantrieb.

Die gesamte Antriebsvorrichtung kann bei Bedarf in wenigen Minuten vom Fahrrad entfernt werden.

Die Antriebsvorrichtung liegt in der Arretierung 1 der Mutter der Hinterachse des Fahrrades auf, zwei verstellbare Klammern 2 greifen unter den Fahrradrahmen und halten sie in der Arretierung 1 fest.

Das Antriebszahnrad 3 ist mit einem Freilauf ausgestattet um in Fahrradbetrieb ohne Elektroantrieb keine zusätzliche Pedalkraft auf zu wenden.

Bei der Demontage der Antriebsvorrichtung vom Fahrrad werden zuerst die beiden Akkus die mit einem Zurrgurt befestigt sind entfernt, dann werden die Spannschrauben 4 von den Klammern 2 entfernt und die Klammern nach außen gedreht.

Die gesamte Vorrichtung wird 2cm nach oben aus der Arretierung 1 gehoben und kann jetzt nach hinten weg genommen werden.

Die einzige Veränderung die am Fahrrad jetzt noch sichtbar ist, ist das Zahnrad 3 und die Arretierung 1 auf den Muttern der Hinterachse des Fahrrads.

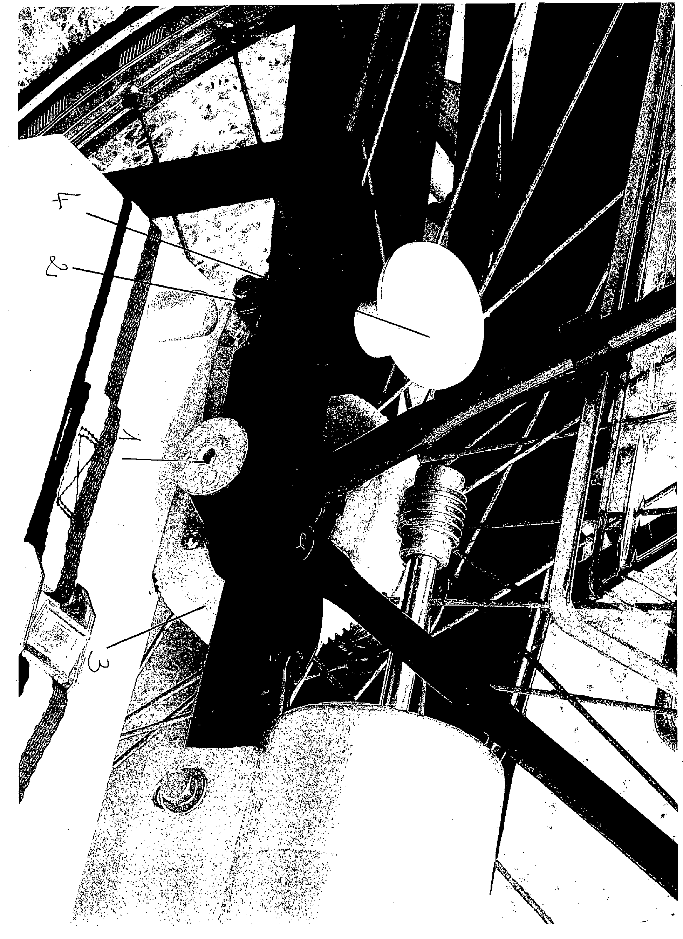

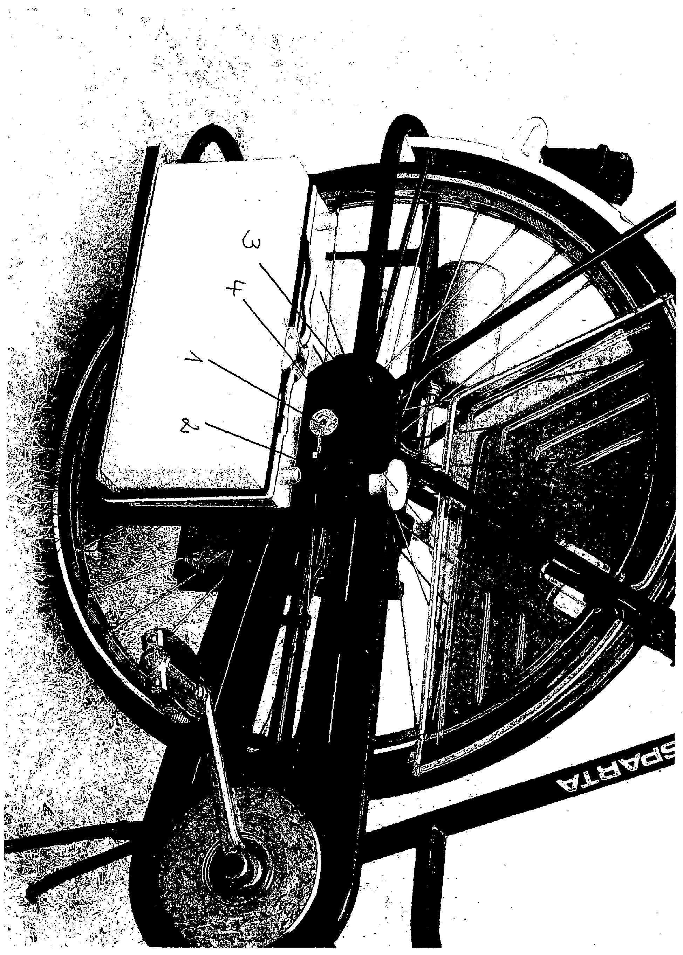

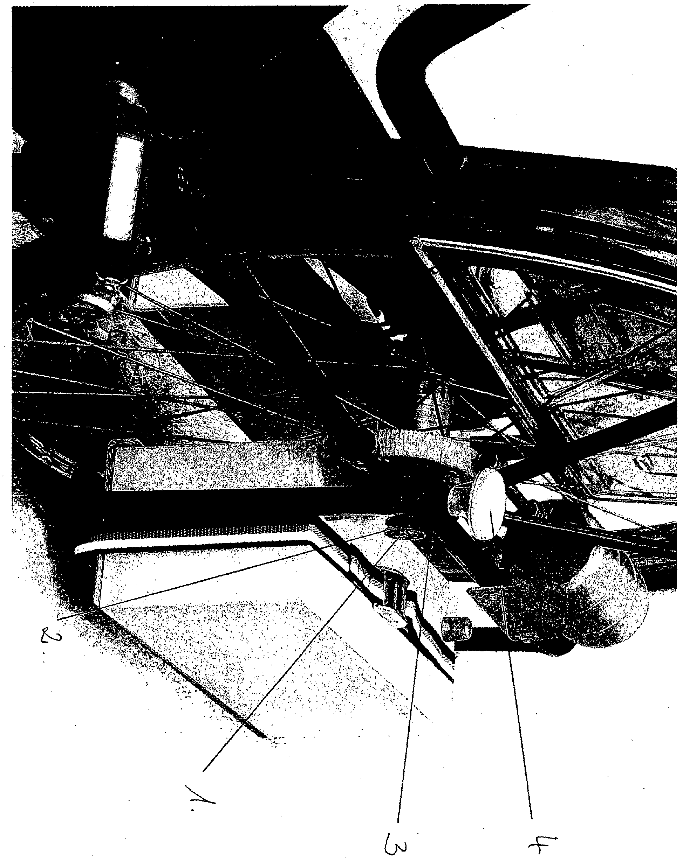

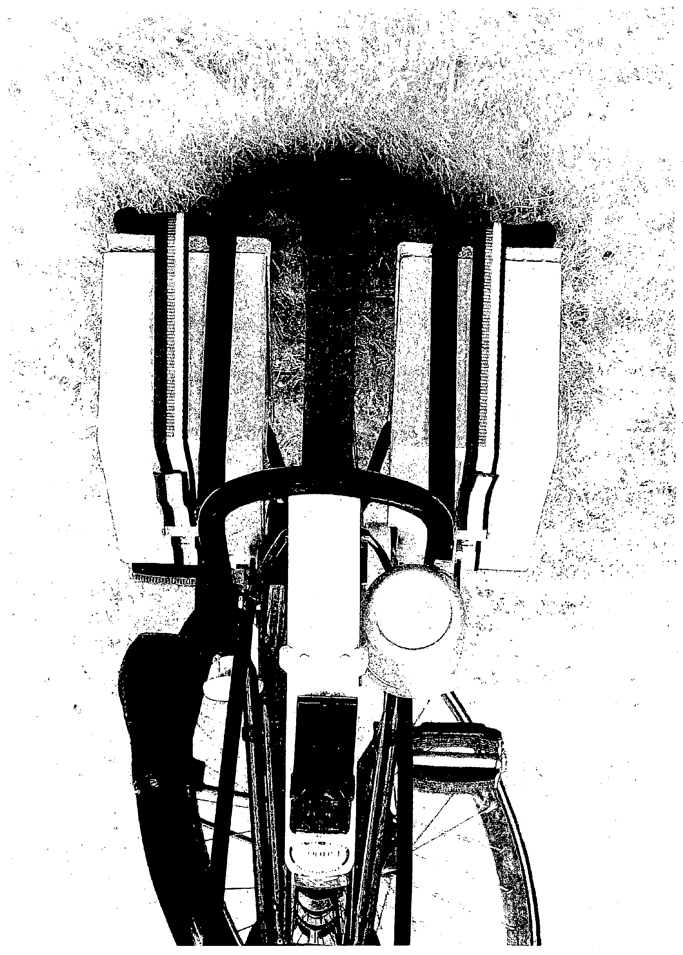

## Patentansprüche

1. die elektrisch betriebene Antriebsvorrichtung passt auf alle Serienfahrräder.

2. Anbringung der Akkus unterhalb der Hinterachse positive Gewichtsverteilung

3. Die komplette Antriebsvorrichtung kann ohne Werkzeug mit ein paar Handgriffen entfernt werden.

4. Das Antriebszahnrad am Fahrrad ist mit einem Freilauf ausgestattet, bei nur Pedalbetrieb kein zusätzlicher Kraftaufwand.

5. Das Fahrrad kann ohne die Antriebsvorrichtung abzunehmen oder einzuschalten nur mit Pedalkraft genutzt werden, denn die Vorrichtung beeinträchtig nicht das Fahrverhalten.

6. Durch die in der Zeichnung ersichtlichen Anordnung der Akkus können Akkus mit großer Leistung eingesetzt werden der Antrieb hat **dadurch** eine mind. Reichweite von 100Km. Dabei ragen die Akkus seitlich nicht über die Pedalen hinaus, auch vergrößert sich die Fahrradlänge nicht.
